# EUROPÄISCHE PATENTANMELDUNG

(11) **EP 3 647 462 A2**
(43) Veröffentlichungstag der Anmeldung: **06.05.2020**
(21) Anmeldenummer: 19204779.3
(22) Anmeldetag: 23.10.2019
(51) Int. Cl.: C23C 18/54, H01M 2/00

(54) **VERFAHREN ZUM ABSCHEIDEN EINER METALLSCHICHT AUF ALUMINIUM**

(30) Priorität: 31.10.2018 DE 102018127292
(71) Anmelder: Plasma Innovations GmbH, 4800 Attnang-Puchheim (AT); Infinite Flex GmbH, 63263 Neu-Isenburg (DE)
(72) Erfinder: Bisges, Michael, 93049 Regensburg (DE); Ma, Dr. Kangkai, 61381 Friedrichsdorf (DE)
(74) Vertreter: Kohlmann, Kai

(57) **Zusammenfassung**

Um ein Verfahren zum Abscheiden einer Metallschicht auf Aluminium vorzuschlagen, welches eine weniger aufwendige Oberflächenbehandlung des Aluminiums erfordert und das eine selektive Abscheidung des Metalls auf der Oberfläche einer Aluminiumschicht ermöglicht, wird vorgeschlagen, dass in einem ersten Schritt ein Laserstrukturieren mindestens eines Teilbereichs der mindestens einen Aluminiumschicht erfolgt. Anschließend erfolgt in einem zweiten Schritt eine außenstromlose Metallabscheidung der Metallschicht im Wege des Austauschverfahrens auf jedem laserstrukturierten Teilbereich der mindestens einen Aluminiumschicht in einem elektrolytischen Bad.

## Beschreibung

Die Erfindung betrifft ein Verfahren zum Abscheiden einer Metallschicht auf Aluminium oder seinen Legierungen.

Aluminium und seine Legierungen - nachfolgend und im Zusammenhang mit der Erfindung kurz als Aluminium bezeichnet - können mit allen galvanisch (elektrolytisch) abscheidbaren Metallen beschichtet werden. Von besonderer Bedeutung sind auf Aluminium galvanisch abgeschiedene Schichten aus Kupfer, Nickel, Chrom, Zinn, Messing, Silber und Gold. Vor dem Galvanisieren muss die auf der Oberfläche des Aluminiums vorhandene natürliche Oxidschicht durch eine Oberflächenvorbehandlung beseitigt werden, weil sich sonst keine festhaftenden Metallniederschläge abscheiden lassen.

Kupfer und Aluminium als gute elektrische Leiter gelangen zur Herstellung elektrischer Verbindungen zum Einsatz. Die Eigenschaften beider Metalle sind jedoch nicht deckungsgleich. Kupfer ist spezifisch schwerer und teurer, jedoch thermisch und chemisch beständiger als Aluminium. Insbesondere bei Anwendungen, bei denen große Mengen der beiden Metalle Aluminium und Kupfer erforderlich sind, wie beispielsweise Starkstromanwendungen, werden beide Metalle parallel eingesetzt. Die vorgenannte Materialpaarung wird beispielsweise in elektro-chemischen Speichersystemen, insbesondere bei Lithium-Ionenbatterien verwendet. Die Leiterfahnen der einzelnen Zellen der Lithium-Ionenbatterie bestehen aus Aluminium. Zum Verschalten der Zellen müssen die Leiterfahnen aus Aluminium an Leiter oder Stromleitschienen aus Kupfer fest haftend angebunden werden.

Aluminium und Kupfer lassen sich jedoch, wie bereits eingangs erwähnt, aufgrund der natürlichen Oxidschicht auf dem Aluminium ohne Oberflächenvorbehandlung nicht haftfest miteinander verbinden.

In dem "Merkblatt O8 - 2. Auflage, Galvanische und chemische Überzüge, Gesamtverband der Aluminiumindustrie e.V." ist das sogenannte Zinkatverfahren zur Metallbeschichtung von Aluminium beschrieben. Die für die Metallbeschichtung von Aluminium erforderliche Oberflächenvorbehandlung umfasst mehrere Schritte, nämlich das Reinigen und Entfetten, das Beizen und das Aktivieren. Das Reinigen dient dem Entfernen von Schmutz- und Fettresten von der Oberfläche des Werkstücks aus Aluminium. Durch das anschließende alkalische Beizen wird die Oxidschicht des Aluminiums beseitigt. Ein anschließendes Beizen in saurer Lösung entfernt von der Oberfläche des Werkstücks nicht abgelöste Schwermetallpartikel, die als Legierungsbestandteil vorhanden sind. Das anschließende Aktivieren verhindert eine erneute Oberflächenoxidation. Hierzu wird die Oberfläche mit einer Zinkatbeize gespült. Zink aus der Lösung schlägt sich metallisch auf der Oberfläche aus Aluminium nieder.

Ein galvanisches Verkupfern erfolgt als abschließender Schritt im Anschluss an die Vorbehandlung des Aluminiums oder es dient der Erzeugung einer Kupferzwischenschicht für ein weiteres Beschichtungssystem. Die Verkupferung wird meist in einem Bad mit cyanidischen Kupferelektrolyten vorgenommen. Das zu verkupfernde, vorbehandelte Werkstück aus Aluminium wird in den Kupferelektrolyten eingebracht. Bei der galvanischen Verkupferung wird durch den Kupferelektrolyten Strom geleitet. An der Anode befindet sich das Kupfer, das auf das Aluminium aufgebracht werden soll. An der Katode befindet sich das zu beschichtende Werkstück aus Aluminium. Der elektrische Strom löst dabei Metallionen von der Kupferelektrode ab und lagert sie durch Reduktion auf der Oberfläche des Aluminiumwerkstücks ab. Auf diese Weise wird das Werkstück aus Aluminium allseitig gleichmäßig mit Kupfer beschichtet. Je länger sich das Werkstück in dem Bad befindet und je höher der elektrische Strom ist, desto stärker wird die Kupferschicht.

Die US 2014/0166098 A1 offenbart Verfahren zur Herstellung elektrisch leitender Aluminiumstrukturen. Ein Aluminium-Folienlaminat wird entsprechend der gewünschten Elektrodenform im Wege des Stanzens, Ätzens oder mittels Laser strukturiert. Anschließend werden oxidierte Teilbereiche der Aluminiumoberfläche, nämlich dort wo elektrische Verbindungen hergestellt werden, entfernt. Das Entfernen der Oxidschicht erfolgt in den Teilbereichen vorzugsweise im Wege der Laserablation. Nach der Entfernung der oxidierten Teilbereiche wird vorzugsweise Kupfer im Wege des Elektroplattierens galvanisch abgeschieden.

Die GB 2 543 514 A offenbart ein Verfahren zum Einbringen von Markierungen in eine anodisierte Metalloberfläche eines Werkstücks, wobei es sich bei den Markierungen beispielsweise um Nummern, Buchstaben, Zeichen, Logos oder Bilder handelt. Im Wege der Anodisierung wird auf die Oberfläche des Werkstücks eine Oxidschicht aufgebracht oder die natürliche Oxidschicht auf der Oberfläche des Werkstücks erhöht. Mit einem Laser wird der Teil der Oberfläche des Werkstücks, die die Markierung umgibt behandelt, um die Oxidschicht zu entfernen. Durch die Laserbehandlung wird eine erste Vertiefung in die Aluminiumschicht eingebracht. In einem anschließenden Schritt wird Füllmaterial in die erste Vertiefung abgeschieden. Das Füllmaterial umfasst eines oder mehrere Metalle einschließlich reine Metalle, Metalllegierungen und/oder Metallverbindungen. Die Abscheidung des Füllmaterials in die erste Vertiefung erfolgt galvanisch im Wege einer elektrochemischen Reaktion eines Metallionen enthaltenen Elektrolyts, das im Wege der Bürstengalvanik aufgebracht wird. Die üblicherweise als Anode geschaltete Bürste wird von einem Tuchmaterial, das mit der elektrolytischen Lösung gesättigt ist, umgeben. Das Werkstück selbst wird mit der Katode der Spannungsquelle verbunden.

Ausgehend von dem bekannten Zinkatverfahren liegt der Erfindung die Aufgabe zugrunde, ein Verfahren zum Abscheiden einer Metallschicht auf Aluminium vorzuschlagen, welches eine weniger aufwendige Oberflächenbehandlung des Aluminiums erfordert und das eine selektive Abscheidung des Metalls auf der Oberfläche einer Aluminiumschicht mit möglichst wenigen Verfahrensschritten ermöglicht.

Diese Aufgabe wird durch ein Verfahren mit den Merkmalen des Anspruchs 1 gelöst. Mit lediglich zwei Schritten lässt sich die Metallschicht, insbesondere aus Kupfer oder einer Kupferlegierung abscheiden:
In einem ersten Schritt erfolgt ein Laserstrukturieren mindestens eines Teilbereichs von mindestens einer Aluminiumschicht. Anschließend erfolgt in einem zweiten Schritt eine außenstromlose Metallabscheidung der Metallschicht auf jedem laserstrukturierten Teilbereich der mindestens einen Aluminiumschicht in einem elektrolytischen Bad, wobei die außenstromlose Metallabscheidung im Wege des Austauschverfahrens erfolgt und das Aluminium der Aluminiumschicht als Reduktionsmittel für das abzuscheidende Metall dient.

Außer dem Laserstukturieren des mindestens einen Teilbereichs ist erfindungsgemäß keine weitere Vorbehandlung der Oberfläche der Aluminiumschicht vor der Metallabscheidung erforderlich und vorgesehen.

Durch das Laserstrukturieren wird eine etwa 1-100µm starke Schicht der Aluminiumschicht teilweise abgetragen und aufgeschmolzen, sodass sich eine mikroraue Oberfläche in dem laserstrukturierten Teilbereich der mindestens einen Aluminiumschicht ausbildet.

Zum Laserstrukturieren des mindestens einen Teilbereichs kommen Festkörperlaser zum Einsatz. Festkörperlaser sind optisch angeregte Laser, deren verstärkendes (aktives) Medium aus einem kristallinen oder amorphen Festkörper besteht. Vorzugsweise kommt ein Faserlaser bei 1064 nm (Infrarot) zum Einsatz, insbesondere ein Nd:YAG-Faserlaser.

Ein Faserlaser ist eine Form des Festkörperlasers, bei der eine Glasfaser das aktive Medium bildet. Die Laserstrahlung, welche durch die laseraktive Faser geleitet wird, erfährt aufgrund der großen Länge eine hohe Verstärkung. Faserlaser werden im Allgemeinen optisch gepumpt. Für die gefordert hohe Leistung bei der Strukturierung der Aluminiumschichten weist der Faserlaser als Dotierungselement für das aktive Medium Ytterbium oder Neodym auf.

Der Faserlaser wird vorzugsweise gepulst betrieben. Durch einen Betrieb des Faserlasers als Ultrakurzpulslaser, mit Pulsdauern im Bereich von Pikosekunden ergeben sich sehr hohe Spitzenintensitäten der Laserstrahlung, sodass der als Ultrakurzpulslaser betriebene Faserlaser besonders für die massenhafte und exakte Laserstrukturierung der Aluminiumschichten geeignet ist.

Überraschend hat sich gezeigt, dass eine außenstromlose haftfeste Metallabscheidung der Metallschicht aus dem elektrolytischen Bad ausschließlich auf jedem laserstrukturierten Teilbereich der mindestens einen Aluminiumschicht stattfindet, nicht jedoch in den nicht laserstrukturierten Bereichen der Aluminiumschicht. Infolgedessen ist mit dem erfindungsgemäßen Verfahren eine selektive Abscheidung von Metallen, insbesondere von Kupfer, Gold, Silber oder Zinn sowie Legierungen der vorgenannten Metalle aus einem außenstromlosen elektrolytischen Bad auf einer Aluminiumoberfläche möglich, wobei als Vorbehandlung ausschließlich das Laserstrukturieren des zu beschichtenden Teilbereichs erforderlich und vorgesehen ist. Eine Metallabscheidung auf nichtlaserstrukturierten und auch nicht anderweit vorbehandelten Bereichen der Aluminiumschicht wurde in Versuchen mit den Abscheidungsmetallen Kupfer, Nickel, Silber, Gold und Zinn nicht beobachtet.

Zur außenstromlosen Metallabscheidung kommt das Austauschverfahren zum Einsatz:
Das Aluminium ist unedler als das in dem elektrolytischen Bad vorliegende Metallion für die Abscheidung, d.h. das Aluminium besitzt ein negativeres Standardpotential nach der elektrochemischen Spannungsreihe, so dass das Aluminium als Reduktionsmittel dient. Das Aluminium mit einem Standardpotential von -1,66 V geht unter Abgabe von Elektronen in Lösung, während das edlere Metallion, beispielsweise Kupfer mit einem Standardpotential von +0,52 V unter Aufnahme von Elektronen reduziert und an dem laserstrukturierten Teilbereich der Aluminiumschicht abgeschieden wird. Mit dem Austauschverfahren lassen sich ebenfalls edle Metalle wie Gold, Silber und Zinn oder Legierungen der vorgenannten Metalle vorteilhaft auf der laserstrukturierten Aluminiumschicht abscheiden.

Das erfindungsgemäße Verfahren eignet sich insbesondere zum Herstellen rigider oder flexibler Leiterplatten mit Leiterbahnen. Hierzu werden mehrere nicht miteinander in Verbindung stehende Aluminiumschichten auf einem Träger aus elektrisch isolierendem Material vor dem Schritt der außenstromlosen Metallabscheidung aufgebracht. Bei dem Träger kann es sich um eine rigide Platte aus Kunststoff oder eine elektrisch isolierende Folie, beispielsweise eine Polyimid-Folie handeln. Zur einwandfreien Löt-Kontaktierung der elektronischen Bauelemente weisen die Leiterbahnen zumindest teilweise Lötbereiche auf. Bei den Lötbereichen handelt es sich um Lötflächen oder auch Lötaugen (Bohrungen). In dem das Laserstrukturieren ausschließlich in den Lötbereichen (Teilbereichen) durchgeführt wird, wird Metall anschließend selektiv ausschließlich in den Lötbereichen abgeschieden. Hierdurch wird das im Vergleich zu dem Aluminium teurere Kupfer gezielt ausschließlich in dem für die Löt-Kontaktierung erforderlichen Teilbereichen der Leiterbahnen aufgebracht, was bei der massenhaften Herstellung von Leiterplatten zu deutlichen geringeren Herstellungskosten beiträgt.

Das Aufbringen der Aluminiumschichten in Form von Leiterbahnen auf dem Träger kann im Wege eines üblichen Beschichtungsverfahrens nach DIN 8580 erfolgen. Alternativ wird die Aluminiumschicht mittels einer Klebstoffschicht, vorzugsweise mit einer Dicke im Bereich von 1 µm bis 50 µm, dauerhaft auf dem Träger aufgebracht. Die aufgebrachte Aluminiumschicht weist vorzugsweise eine Dicke im Bereich von 10 µm bis 100 µm auf. Der Klebstoff ist beispielsweise ein Acrylat oder Epoxydklebstoff. Vorzugsweise verbindet der Klebstoff eine Polyimidfolie als Träger mit einer die Aluminiumschicht bildenden Aluminiumfolie. Sofern zwei Leiterbahnen tragende Ebenen aufgrund des Schaltungsaufbaus erforderlich sind, ist in einer Ausgestaltung des erfindungsgemäßen Verfahrens vorgesehen, dass die Aluminiumschichten zur Ausbildung der Leiterbahnstrukturen auf beiden Seiten des Trägers, insbesondere der Folie aufgebracht werden.

In einer bevorzugten Ausgestaltung des erfindungsgemäßen Verfahrens enthält das elektrolytische Bad Kupfer oder eine Kupferlegierung zur außenstromlosen Metallabscheidung einer Kupferschicht. Sofern dem elektrolytischen Bad zusätzlich organische Substanzen wie Adipinsäure, Benzotriazol, Imidazol oder Benzimidazol beigegeben werden, gehen diese organischen Substanzen mit der abgeschiedenen Kupferschicht eine metallorganische koordinative Bindung ein, die das in den Lötbereichen abgeschiedene Kupfer vor Oxidation schützen.

Alternativ wird nach dem selektiven Abscheiden des Kupfers in den Lötbereichen ein Oberflächenschutz basierend auf den vorgenannten organischen Substanzen (OSP, englisch: organic solderability preservative) aufgebracht. Der organische Oberflächenschutz (OSP) wird durch ein Tauch- oder Spülbad auf den lötbaren Kupferflächen abgeschieden. Die Schicht bildet nach dem Trocknen einen geschlossenen, farblosen unsichtbaren Schutzfilm mit einer Dicke von 0,2 bis 0,4 µm. Die derart hergestellten Schaltungsträger sind für einen Zeitraum von bis zu sechs Monaten vor Oxidation geschützt.

Eine einfache Möglichkeit zum Aufbringen des organischen Oberflächenschutzes (OSP) auf eine abgeschiedene Metallschicht aus Kupfer besteht darin, dass beim anschließenden Reinigen der abgeschiedenen Metallschicht ein wässriges Reinigungsmittel enthaltend die organischen Substanzen verwendet wird. Der Oberflächenschutz wird thermisch bei anschließenden Lötprozessen auf den verkupferten Lötbereichen aufgelöst.

Zur Vermeidung einer Oxidation des abgeschiedenen Metalls wird in einer Ausgestaltung der Erfindung in einem sich an das Abscheiden des Metalls anschließenden Schritt ein Reduktionsmittel auf die Metalloberfläche aufgebracht. Das Aufbringen erfolgt vorzugsweise mittels eines atmosphärischen Plasmabeschichtungsprozesses auf der abgeschiedenen Metallschicht. Als Reduktionsmittel kommen beispielsweise Adipinsäure oder Benzimidazol in Betracht. Der atmosphärische Plasmabeschichtungsprozess findet unter Atmosphärendruck, d.h. unter Normaldruck statt. Im Gegensatz zum Niederdruckplasma oder Hochdruckplasma ist kein Reaktionsgefäß für die Erhaltung eines zum Atmosphärendruck unterschiedlichen Druckniveaus erforderlich, sodass sich das Aufbringen des Reduktionsmittels unproblematisch in einen kontinuierlichen Herstellungsprozess integrieren lässt. Insbesondere bei einem von Rolle zu Rolle geführten Prozess, bei dem auf eine elektrisch isolierte Folie ein oder beidseitig Leiterbahnen auf Aluminium und entsprechende Kupferbeschichtungen in den Lötbereichen aufgebracht werden, kann das Aufbringen des Reduktionsmittels vorteilhaft unter atmosphärischen Bedingungen erfolgen.

Nachfolgend wird das erfindungsgemäße Verfahren anhand der Figuren näher erläutert. Es zeigen
- **Figur 1**: das Aufbringen von Aluminiumschichten auf einen Träger,
- **Figur 2**: das Laserstrukturieren von Teilbereichen der Aluminiumschichten,
- **Figur 3**: den Träger nach einer außenstromlosen selektiven Metallisierung der laserstrukturierten Teilbereiche sowie
- **Figur 4**: eine Detailansicht zur Veranschaulichung des Laserstrukturierens.

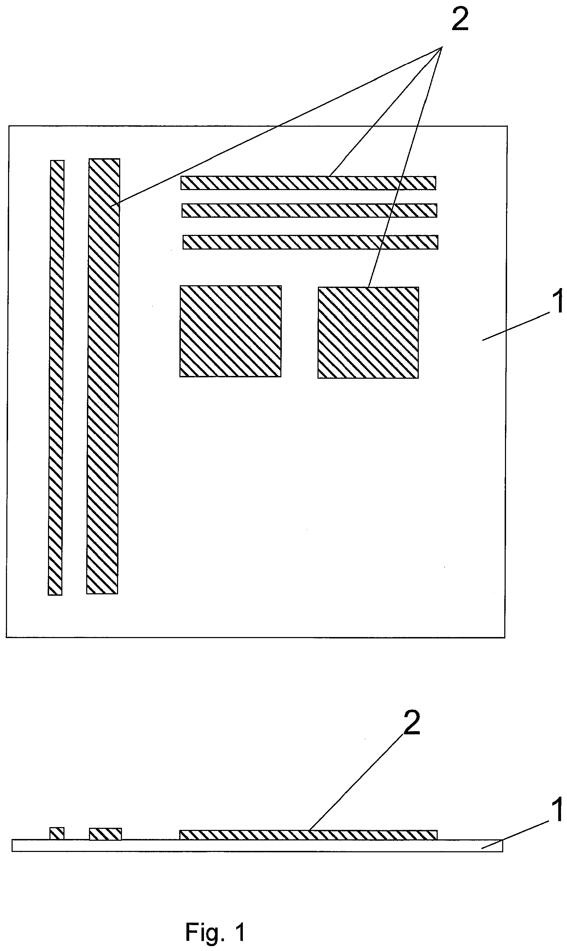

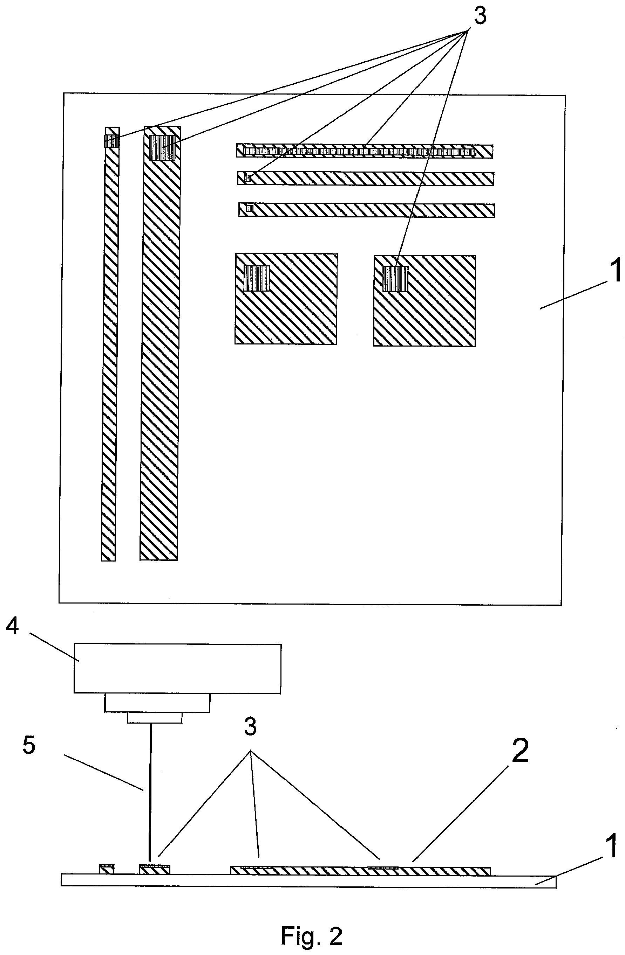

Figuren 1 - 4 veranschaulichen die Herstellung einer flexiblen Leiterplatte.

Die flexible Leiterplatte weist als Träger (1) eine Polyimid-Folie auf. Die Polyimid-Folie wird mit mehreren, nicht miteinander in Verbindung stehenden Aluminiumschichten (2) beschichtet (Figur 1). Die Aluminium-Schichten (2) weisen die Form von Leiterbahnen auf.

Jeweils ein Teilbereich (3) jeder Aluminiumschicht (2) wird mithilfe eines Lasers (4) strukturiert. Bei dem Laser (4) handelt es sich beispielsweise um einen mit ultrakurzen Pulsen betriebenen Faserlaser mit einer Wellenlänge von 1064 nm.

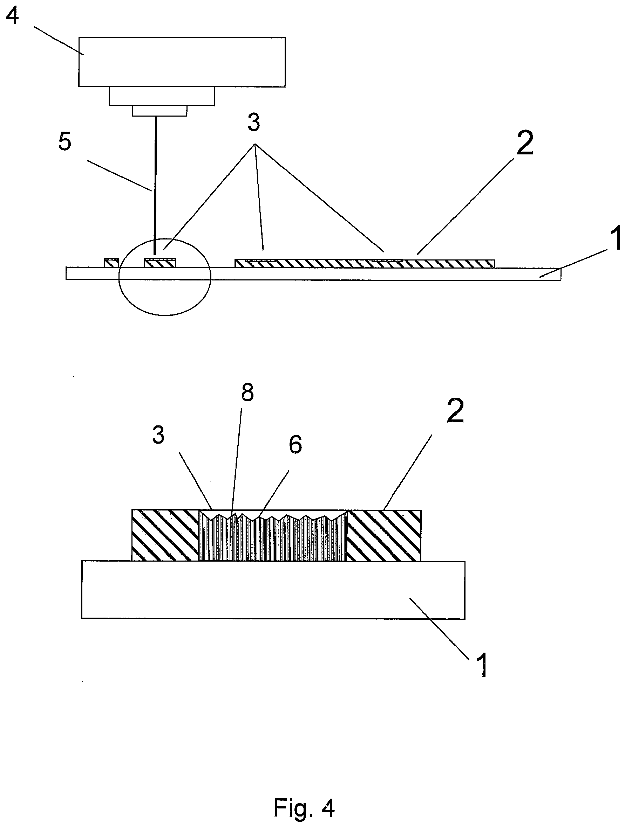

Figur 4 verdeutlicht, wie der Laserstrahl (5) des Lasers (4) eine wenige Mikrometer dicke Oberflächenschicht (8) der Aluminium-Schicht (2) in dem Teilbereich (3) abträgt und aufschmilzt, sodass sich eine mikroraue Oberflächenstruktur (6) durch den Vorgang der Laserstrukturierung bildet.

Das Laserstrukturieren wird ausschließlich in den Teilbereichen (3) durchgeführt, die die auf den Leiterbahnen vorgesehenen Lötbereiche definieren.

Im Anschluss an den Schritt des Laserstrukturierens erfolgt eine außenstromlose Metallabscheidung einer Metallschicht (7) aus Kupfer in einem elektrolytischen Bad enthaltend ein Kupferelektrolyt. Da die Aluminium-Schichten (2) auf dem Träger (1) unedler sind, als die in dem Kupferelektrolyten vorliegenden Kupferionen geht das Aluminium unter Abgabe von Elektronen in Lösungen, während die edleren Kupferionen unter Aufnahme von Elektronen reduziert werden und sich ausschließlich in den zuvor laserstrukturierten Teilbereichen (3) abscheiden.

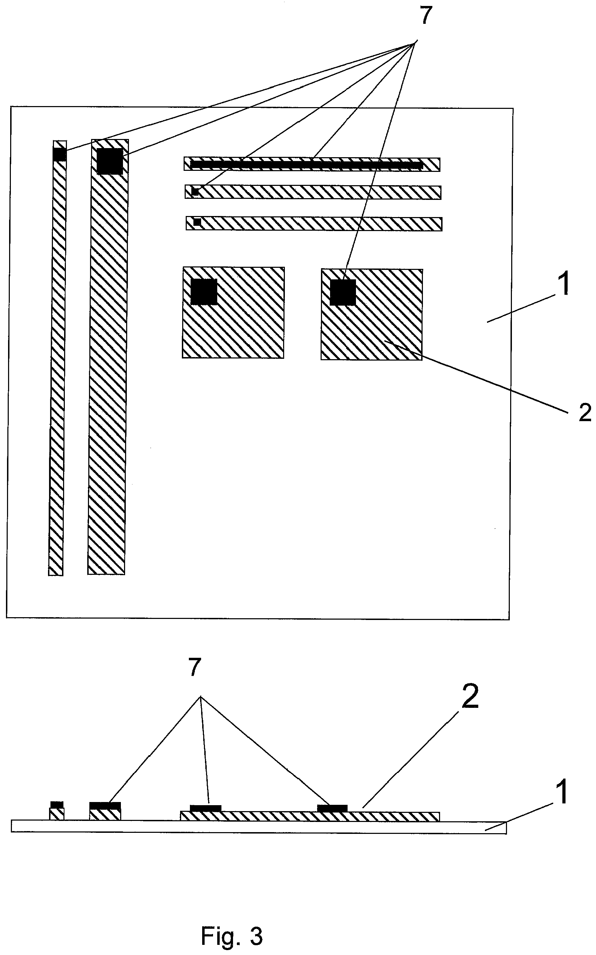

Aufgrund der außenstromlosen Metallabscheidung im Wege des Austauschverfahrens bilden sich die in Figur 3 dargestellten Metallschichten (7) aus Kupfer. Bei den Metallschichten (7) handelt es sich um nach dem erfindungsgemäßen Verfahren hergestellte Kupfer-Lötpads in den Lötbereichen der Aluminium-Schichten (2), die die Leiterbahnen bilden.

Der wesentliche Vorteil der Erfindung besteht darin, dass die Vorbehandlung der Aluminiumschicht durch das ausschließliche Laserstrukturieren erheblich vereinfacht und zugleich durch das Laserstrukturieren eine selektive Metallabscheidung durch außenstromlose Metallabscheidung im Wege des Austauschverfahrens, insbesondere Verkupferung von Teilbereichen der mindestens einen Aluminiumschicht, in nur zwei Verfahrensschritten ermöglicht wird.

**Bezugszeichenliste**

| **Nr.** | **Bezeichnung** |
|---|---|
| 1. | Träger |
| 2. | Aluminium-Schicht |
| 3. | Teilbereich |
| 4. | Laser |
| 5. | Laserstrahl |
| 6. | Oberflächenstruktur |
| 7. | Metallschicht |
| 8. | Oberflächenschicht |

## Patentansprüche

1. Verfahren zum Abscheiden einer Metallschicht (7) umfassend die Schritte:
- Laserstrukturieren mindestens eines Teilbereichs (3) von mindestens einer Aluminiumschicht (2) und
- außenstromlose Metallabscheidung der Metallschicht (7) auf jedem laserstrukturierten Teilbereich (3) der mindestens einen Aluminiumschicht (2) in einem elektrolytischen Bad, wobei die außenstromlose Metallabscheidung im Wege des Austauschverfahrens erfolgt und das Aluminium der Aluminiumschicht (2) als Reduktionsmittel für das abzuscheidende Metall dient.

2. Verfahren nach Anspruch 1, **gekennzeichnet durch** den weiteren Schritt:
- Aufbringen mehrerer nicht miteinander in Verbindung stehender Aluminiumschichten (2) auf einen Träger (1) aus elektrisch isolierendem Material vor dem Schritt der außenstromlosen Metallabscheidung.

3. Verfahren nach Anspruch 2, **dadurch gekennzeichnet, dass** das Aufbringen derart erfolgt, dass die Aluminiumschichten (2) die Form von Leiterbahnen aufweisen.

4. Verfahren nach Anspruch 3, **dadurch gekennzeichnet, dass** der mindestens eine Teilbereich (3) der mindestens einen Aluminiumschicht (2) einen Lötbereich definiert.

5. Verfahren nach einem der Ansprüche 2 bis 4, **dadurch gekennzeichnet, dass** als Träger (1) eine elektrische isolierende Folie verwendet wird.

6. Verfahren nach einem der Ansprüche 2 bis 5, **dadurch gekennzeichnet, dass** der Schritt des Aufbringens der Aluminiumschichten (2) im Wege eines Beschichtungsverfahrens erfolgt.

7. Verfahren nach einem der Ansprüche 2 bis 5, **dadurch gekennzeichnet, dass** jede Aluminiumschicht (2) mittels einer Klebstoffschicht auf dem Träger (1) aufgebracht wird.

8. Verfahren nach einem der Ansprüche 1 bis 7, **dadurch gekennzeichnet, dass** jede Aluminiumschicht (2) eine Dicke im Bereich 10µm - 100µm aufweist.

9. Verfahren nach einem der Ansprüche 1 bis 8, **dadurch gekennzeichnet, dass** die abgeschiedene Metallschicht (7) eine Dicke im Bereich 0,5pm - 50pm aufweist.

10. Verfahren nach einem der Ansprüche 7 bis 9, **dadurch gekennzeichnet, dass** die Klebstoffschicht eine Dicke im Bereich 1µm - 50µm aufweist.

11. Verfahren nach einem der Ansprüche 2 bis 10, **dadurch gekennzeichnet, dass** die Aluminiumschichten (2) auf beiden Seiten des Trägers aufgebracht werden.

12. Verfahren nach einem der Ansprüche 1 bis 11, **dadurch gekennzeichnet, dass** das elektrolytische Bad Kupfer oder eine Kupferlegierung enthält.

13. Verfahren nach Anspruch 12, **dadurch gekennzeichnet, dass** das elektrolytische Bad zusätzlich Benzotriazol, Imidazol oder Benzimidazol enthält.

14. Verfahren nach Anspruch 12, **dadurch gekennzeichnet, dass** auf eine abgeschiedene Metallschicht (7) aus Kupfer oder einer Kupferlegierung ein organischer Oberflächenschutz (OSP) oder eine Schicht aus Nickel oder Gold aufgebracht wird aufgebracht wird.

15. Verfahren nach Anspruch 12, **gekennzeichnet durch** den weiteren Schritt:
- Reinigen der abgeschiedenen Metallschicht (7) mittels eines wässrigen Reinigungsmittels enthaltend Benzotriazol, Imidazol oder Benzimidazol.

16. Verfahren nach einem der Ansprüche 1 bis 11 **gekennzeichnet durch** den weiteren Schritt:
- Aufbringen eines Reduktionsmittels mittels eines atmosphärischen Plasmabeschichtungsprozesses auf der abgeschiedenen Metallschicht (7).

17. Verfahren nach einem der Ansprüche 1 bis 16, **dadurch gekennzeichnet, dass** für das Laserstrukturieren ein Faserlaser oder ein Ultrakurzpulslaser verwendet wird.
